# EUROPEAN PATENT APPLICATION

(11) **EP 1 099 378 A1**
(43) Date of publication of application: **16.05.2001**
(21) Application number: 00309521.3
(22) Date of filing: 27.10.2000
(51) Int. Cl.: A01N 25/04, A01N 37/22

(54) **Stable dispersions of propanil**

(30) Priority: 08.11.1999 US 164228 P
(71) Applicant: ROHM AND HAAS COMPANY, Philadelphia, Pennsylvania 19106-2399 (US)
(72) Inventor: Bean, Timothy Andrew, Quakertown, Pennsylvania 18951 (US); Gore, Robert Howard, Southampton, Pennsylvania 18966 (US); Briscoe, Shelley Jean, Norristown, Pennsylvania 19403 (US); Machleder, Warren, Blue Bell, Pennsylvania 19422 (US); Nguyen, Luong Tu, Lansdale, Pennsylvania 19446 (US); Sun, Yan, Dresher, Pennsylvania 19025 (US)
(74) Representative: Buckley, Guy Julian

(57) **Abstract**

The present invention provides stable dispersions of propanil herbicide in an agricultural oil wherein the dispersion contains an oil-soluble polymer which comprises one or more alkyl methacrylates and/or alkyl acrylates and one or more copolymerized polar monomers selected from N-vinylpyrrolidone, hydroxyalkyl methacrylate, dimethylaminopropyl methacrylate and dimethylaminopropyl methacrylamide. Also provided are methods to prepare the dispersions.

## Description

The present invention relates to stable dispersions of propanil herbicide in an agricultural oil wherein the dispersion comprises an oil-soluble polymer, wherein the polymer has a weight average molecular weight from 3,000 to 350,000 AMU and comprises 2.5-35 percent by weight of a copolymerized polar monomer selected from N-vinylpyrrolidone, hydroxyalkyl methacrylate, dimethylaminopropyl methacrylamide, and dimethylaminoethyl methacrylate and the polymer further comprises from 60-97.5 percent by weight of alkyl methacrylates and/or alkyl acrylates wherein the alkyl group(s) contains from 1 to 24 carbon atoms with an average of 10 to 18 carbon atoms.

European Patent Application No. 0 875 142 A1, published November 4, 1998, discloses a variety of stable pesticide dispersions made using an agricultural oil and an oil-soluble polymer, wherein the polymer has a weight average molecular weight from 3,000 to 120,000 atomic mass units ("AMU") and includes 2.5-35 percent by weight of a copolymerized polar monomer. This application discloses a number of pesticides which are suitable for forming the stable pesticide dispersions. However, none of disclosed dispersions include propanil (N-(3,4-dichlorophenyl)propanamide) as the pesticide component. There is a need, therefore, for such propanil dispersions.

We have discovered that of the broad group of oil-soluble polymers disclosed in EP 0 875 142, certain selected species are surprisingly effective in forming stable pesticide dispersions of propanil in oil. In addition, when such dispersions incorporate selected surfactants, they are dilutable with both water and oil. The dispersions disclosed in EP 0 875 142 are typically only dilutable in oil.

This invention, therefore, provides a stable propanil dispersion comprising:
a) from 0.1 percent to 50 percent, by weight, propanil;
b) an agricultural oil; and
c) an oil-soluble polymer, wherein:
   i) the polymer has a weight average molecular weight of from 3,000 to 350,000 AMU;
   ii) the polymer comprises 2.5 to 35 percent, by weight, of a copolymerized polar monomer selected from N-vinylpyrrolidone, hydroxy(C₂-C₈)alkyl methacrylate, dimethylaminopropyl methacrylate and dimethylaminopropyl methacrylamide; and
   iii) the polymer comprises from 40 to 97.5 percent, by weight, of an alkyl methacrylate, an alkyl acrylate, or mixture thereof wherein the alkyl groups of each such methacrylate or acrylate independently contain from 1 to 24 carbon atoms with an average of from 10 to 18 carbon atoms.

The term "stable propanil dispersion" means a dispersion of propanil which does not gel during or after its preparation. The term "gel" refers to a colloid in which the dispersed phase combines with the continuous phase to produce a viscous, cohesive, jelly-like product. The stable dispersion is stable relative to a dispersion of propanil prepared in like manner in the absence of the oil-soluble polymer. Preferred are dispersions which, in addition to the absence of gelling, have an initial viscosity less than 200 centipoise ("cPcP") after initial homogenation during preparation and less than 2000 cP, preferably less than 1000 cP, after any optional second milling steps. More preferred are dispersions which, after standing 1-2 weeks at 54 °C with no gelling, maintain a viscosity less than 2000 cP, preferably less than 1000 cP, there is less than 10 percent separation of a top clear liquid, and there is little or no formation of sediment on the bottom of the dispersion container.

In addition to propanil, the compositions of this invention may include one or more additional pesticides. Such pesticides preferably have a molecular weight greater than 200; low solubility in paraffinic solvents, preferably less than 1 percent by weight; and contain one or more polar functional groups such as, for example, ester, carbonyl, hydroxy, and cyano. More preferred are pesticides which are either: a) solids with a relatively high melting point, preferably greater than 70°C or b) liquids at room temperature, i.e. less than 25°C, and which are also either soluble or miscible in the oil or are emulsifiable in the oil. Useful pesticides include fungicides, additional herbicides, insecticides, and microbicides such as, for example, chlorinated nitriles, triazoles such as myclobutanil (Mp 63-68 °C), aralkyl triazoles such as fenbuconazole (Mp 124-126 °C), triazole anilides, amides such as isoxaben (Mp 176-179 °C) and pronamide (Mp 155-156 °C), benzamides such as thifluzamide (Mp 178 °C), , alkyl benzamides such as zoxamide (ISO proposed common name, Mp 167 °C) , diphenyl ethers such as oxyfluorfen (Mp 85-90 °C) , pyridine carboxylic acids such as thiazopyr (Mp 79-81 °C) and triclopyr, chloroanilines, organophosphates such as phosmet (Mp 72-73 °C), triazines such as piperophos, and mixtures thereof.

In order to prepare the stable propanil dispersion, the propanil, the oil-soluble polymer, and the oil may be mixed in any order. Preferably the oil-soluble polymer and the oil are mixed together and then the pesticide is added to the polymer/oil mixture. Alternatively, the propanil is melted prior to addition to the mixture of the oil-soluble polymer and the oil. Improved dispersions result when, in addition to the propanil, the oil-soluble polymer or the oil-soluble polymer/oil mixture is heated prior to admixing with the propanil. Preferably the polymer or polymer/oil mixture is heated to from 50 °C to 200 °C. More preferably the polymer or polymer/oil mixture is heated to from 50 °C to 150 °C; even more preferably from 50 °C to 100 °C. Preferably, the polymer is mixed with the oil prior to or during heating. Thus, there are two preferred methods to produce the stable dispersions of this invention:
1.
   a) admixing solid propanil with an agricultural oil and an oil-soluble polymer;
   b) optionally heating the mixture to a temperature above the melting point of the propanil until the propanil melts; and
   c) mixing the admixture until a homogeneous blend is obtained.
2.
   a) melting the propanil;
   b) admixing the melted propanil with an agricultural oil and an oil-soluble polymer, optionally heating the agricultural oil and/or the oil-soluble polymer prior to adding the propanil; and
   c) mixing the admixture until a homogeneous blend is obtained.

One skilled in the art will recognize that the mixing step may be accomplished using any one of a variety of apparatus including; for example, rotor/stator homogenizers, in-line emulsifiers, static mixers, piston homogenizers, ultrasonic homogenizers, and high-speed jets or nozzles. Homogenizers which provide high speed and high shear are preferred. However, care must be taken when mixing the components of the composition to avoid over processing (that is, mixing at high speed for long periods of time) which results in excessive flocculation and clumping of the propanil. Typically the agitation rate and time of agitation will vary depending upon the amount of material used and the type of mixer employed. The optimum combination must be determined experimentally. For any one combination the optimum dispersion is obtained using the maximum agitation rate and agitation time which does not result in flocculation.

The mixing process may result in a dispersion wherein the particle size of the propanil is from 0.5 to 100 microns (µ). Preferably the particle size will be from 0.5 to 10 µ. When it is desired to reduce the propanil particle size below that obtained in the mixing process, the dispersion may be subjected to a separate milling process. Typical milling procedures which may be used include, for example, tumble milling with grinding media (balls, rods), roller milling (feeding through a small gap), and media milling (bead milling). The term "particle size" means the volume average particle diameter as measured, for example, by a laser particle size instrument such as the Coulter LS™ particle sizer (Coulter Instruments).

Agricultural oils useful in this invention are oils suitable for agronomic application, typically of high purity, and generally comprised of branched or linear carbon chains with lengths of C₂₀ to C₂₆. They are characterized by low odor, low solvency for organic and organo-metallic compounds, low phytotoxicity to plants, and low volatility. Typical physical characteristics of agricultural oils include; specific gravity of 0.75-0.90 at 16 °C , flash point greater than 49 °C, unsulfonated residue greater than 90 percent, and a distillation range of 175 °C to 235 °C. Commercial examples of such agricultural oils include: Orchex™ 796 oil, Orchex™ 692 oil, Sunspray™ 7N oil, Sunspray™ 11N oil (Sun Company); Oleo Blanco oil (also known as white oil, Witco Corp. or Pennzoil-Quaker State Company); Isopar™ M oil, Isopar™ V oil, 100 Neutral oil (Chevron Oil Co.), and Exxsol™ D-130 oil (Exxon Corp.). Other non-phytotoxic oils such as mineral oils; crop oils such as, for example, vegetable oil, peanut oil, and cottonseed oil; or synthetic oils are acceptable substitutes for aliphatic oils.

The oil-soluble polymers used in this invention are copolymers of one or more alkyl (meth)acrylates and one or more polar monomers selected from N-vinylpyrrolidone, hydroxy(C₂-C₈)alkyl-methacrylates, dimethylaminoethyl-methacrylate, and dimethylaminopropyl-methacrylamide. For purposes of this invention, the term "oil soluble" means that the polymer is miscible in the selected oil at a concentration range up to 20 percent, by weight, polymer to oil plus polymer. The term "alkyl (meth)acrylate" means an alkyl methacrylate or alkyl acrylate wherein the alkyl group contains from 1 to 24 carbon atoms such as, for example, methyl methacrylate (MMA), methyl acrylate, ethyl acrylate, propyl methacrylate, butyl methacrylate (BMA), butyl acrylate (BA), isobutyl methacrylate (IBMA), hexyl and cyclohexyl methacrylate, cyclohexyl acrylate, 2-ethylhexyl acrylate (EHA), 2-ethylhexyl methacrylate, octyl methacrylate, decyl methacrylate, isodecyl methacrylate (IDMA, based on branched C₁₀-alkyl isomer mixture), undecyl methacrylate, dodecyl methacrylate (also known as lauryl methacrylate), tridecyl methacrylate, tetradecyl methacrylate (also known as myristyl methacrylate), pentadecyl methacrylate, dodecyl-pentadecyl methacrylate (DPMA, a mixture of linear and branched isomers of dodecyl, tridecyl, tetradecyl and pentadecyl methacrylates), lauryl-myristyl methacrylate (LMA, a mixture of dodecyl and tetradecyl methacrylates), hexadecyl methacrylate, heptadecyl methacrylate, octadecyl methacrylate, nonadecyl methacrylate, eicosyl methacrylate, behenyl methacrylate (BehMA), cetyl-eicosyl methacrylate (CEMA, a mixture of hexadecyl, octadecyl and eicosyl methacrylate), and cetyl-stearyl methacrylate (SMA, a mixture of hexadecyl and octadecyl methacrylate), and combinations thereof. However, the alkyl groups must have an average carbon chain length of from 10 to 18 carbon atoms.

Preferred oil-soluble polymers are those wherein the alkyl groups average from 12 to 16 carbon atoms. More preferred are those wherein the alkyl groups average from 12 to 14 carbon atoms. LMA is most preferred.

The alkyl methacrylate and alkyl acrylate monomers described above are generally prepared by standard esterification procedures using technical grades of long chain aliphatic alcohols. Commercially available alcohols are typically mixtures of alcohols of varying chain lengths containing between 10 and 18 carbon atoms in the alkyl group. Consequently, for the purposes of this invention, alkyl (meth)acrylate is intended to include not only the individual alkyl (meth)acrylate product named, but also to include mixtures of the alkyl (meth)acrylates with a predominant amount of the particular alkyl (meth)acrylate named. The use of these commercially available alcohols to prepare acrylate and methacrylate esters results in the LMA, DPMA, and SMA monomer mixtures described above.

The polar monomers are selected from N-vinylpyrrolidone (NVP), hydroxy(C₂-C₈)alkyl methacrylate (HPMA), dimethylaminoethyl-methacrylate (DMAEMA), and dimethylaminopropyl methacrylamide (DMAPMAm). Because it allows for the highest level (that is, percent loading) of propanil in the dispersion, NVP is the preferred polar monomer. Preferably the NVP comprises 4-25 percent, by weight, preferably 5-20 percent, percent of the polymer. Mixtures of NVP/HPMA, NVP/DMAEMA, and NVP/DMAPMAm) are less preferred. When HPMA, DMAEMA, or DMAPMAm are used alone, dispersions containing more than about 10 percent, by weight, propanil (10 percent loading) do not exhibit satisfactory stability. Below 10 percent loading such dispersions exhibit acceptable stability.

In order to maintain oil solubility as the amount and/or polarity of the polar monomer in the polymer increases, the average chain length of the alkyl side chains in the (meth)acrylate comonomers must also increase. For example, a polymer that contains greater than 10 percent by weight of copolymerized HPMA typically requires a greater amount of alkyl side chains containing C₁₆-C₁₈ alkyl rather than C₁₂-C₁₄ alkyl groups. Small amounts of alkyl side chain monomers such as, for example, C₈-C₁₀ may be included in the polymer with a corresponding increase in the proportion of longer alkyl side chain monomers.

The weight average molecular weight of the polymer may vary from 3,000 to 350,000 AMU depending on the pesticide to be dispersed. The polymer molecular weight has a direct effect on the viscosity of the formulation; higher molecular weight typically results in higher solution viscosity which often results in decreased propanil particle mobility and delayed separation and settling. Unfortunately, higher solution viscosity may also hinder the flowability, transfer, and dilution of the pesticide dispersion when diluted. To balance these two opposing properties, preferred are weight average molecular weights of 15,000 to 350,000 AMU; more preferred are weight average molecular weights of 25,000 to 120,000, most preferred are weight average molecular weights of 50,000 to 80,000.

Due to the large number of interactions encountered in mixing together the propanil and optional other pesticides, the oil soluble polymer, and the agricultural oil, not all combinations will provide a stable pesticide dispersion. The selection of the optimum composition is usually a balance between the oil and the oil soluble polymer. When the nature of the oil used in the composition is changed, the optimum selection of the oil soluble polymer or polymers should be changed accordingly. By considering the factors described above, one skilled in the art can optimize the combination with only a limited amount of experimentation. The following polymers should be evaluated to determine trends in functionality which will provide a formulation with the desired properties. Data obtained from these initial trials will enable fine-tuning of the final formulation properties.

**Table 1**

| Composition | Monomer Weight percent | Mol. wt. |
|---|---|---|
| CEMA/LMA/IBMA/NVP graft | 42.5/42.5/10/5 | <75,000 |
| CEMA/LMA/BMA/NVP | 40/40/10/10 | <75,000 |
| CEMA/LMA/BMA/NVP | 37.5/37.5/10/15 | <75,000 |
| CEMA/LMA/IBMA/HPMA | 42.5/42.5/10/5 | <75,000 |
| CEMA/LMA/BMA/HPMA | 40/40/10/10 | <75,000 |
| CEMA/LMA/BMA/HPMA | 37.5/37.5/10/15 | <75,000 |
| CEMA/LMA/IBMA/DMAPMAm | 42.5/42.5/10/5 | <75,000 |
| CEMA/LMA/BMA/DMAPMAm | 40/40/10/10 | <75,000 |
| CEMA/LMA/BMA/DMAPMAm | 37.5/37.5/10/15 | <75,000 |
| SMA/DMAPMAm | 85/15 | 25-50,000 |

The polymers are typically made using standard procedures by mixing the monomers in the presence of a polymerization initiator, an agricultural oil and, optionally, a chain transfer agent. These processes are described in detail in European Patent Application No. 0 875 142 A1. The reaction may be run under agitation in an inert atmosphere at a temperature of from 60 to 140 °C for 4 to 10 hours or until the desired degree of polymerization is reached. As is recognized by those skilled in the art, the time and temperature of the reaction are dependent on the choice of initiator and can be varied accordingly. Polymers may be prepared by techniques known in the art to form graft polymers, block copolymers, star copolymers, or variable composition copolymers as well as random copolymers. Preferred polymers are either random copolymers, graft copolymers, or mixtures thereof. Random copolymers are most preferred. In such polymers the polar monomer is more evenly distributed throughout the polymer.

Initiators useful for this polymerization are any of the well known free-radical-producing compounds such as peroxy, hydroperoxy and azo initiators including acetyl peroxide, benzoyl peroxide, lauroyl peroxide, *t*-butyl peroxyisobutyrate, caproyl peroxide, cumene hydroperoxide, 1,1-di(*t*-butylperoxy)-3,3,5-trimethylcyclohexane, azobisisobutyronitrile, 2,2'-azobis(2-methylbutane nitrile), and *t*-butyl peroctoate. The initiator concentration is normally between 0.025 and 5 percent by weight based on the total weight of the monomers. Chain transfer agents may also be added to the polymerization reaction to control the molecular weight of the polymer. Preferred chain transfer agents are alkyl mercaptans such as lauryl (dodecyl) mercaptan. The concentration of chain transfer agent used is from about 0.1 to about 10 percent by weight.

Compositions and physical characteristics of some typical polymers which are useful in this invention are presented in Table 2 below.

**Table 2**

| Polymer Compositions and physical characteristics | | | |
|---|---|---|---|
| No. | Composition | Monomer Weight percent | Mol. wt. |
| 1 | CEMA/IDMA/MMA/DMAPMAm | 25.2/55.8/9/10 | 31,400 |
| 2 | CEMA/IDMA/MMA/DMAPMAm | 26.5/58.9/9.5/5 | 57,900 |
| 3 | CEMA/LMA/DMAPMAm | 15/65/20 | 35,000 |
| 4 | CEMA/LMA/DMAPMAm | 4.5/91.5/4 | 45,900 |
| 5 | CEMA/LMA/IBMA/DMAPMAm | 37.5/37.5/10/15 | 37,900 |
| 6 | CEMA/LMA/IBMA/DMAPMAm | 37.5/37.5/10/15 | 45,200 |
| 7 | CEMA/LMA/IBMA/DMAPMAm | 40/40/10/10 | 31,700 |
| 8 | CEMA/LMA/IBMA/DMAPMAm | 42.5/42.5/10/5 | 35,300 |
| 9 | CEMA/LMA/IBMA/HPMA | 37.5/37.5/10/15 | 65,800 |
| 10 | CEMA/LMA/IBMA/HPMA | 40/40/10/10 | 40,000 |
| 11 | CEMA/LMA/IBMA/HPMA/NVP | 40/40/10/2/8 | 50,400 |
| 12 | CEMA/LMA/IBMA/NVP | 32.7/43.8/13.7/9.8 | 334,000 |
| 13 | CEMA/LMA/IBMA/NVP | 37.5/37.5/10/15 | 63,900 |
| 14 | CEMA/LMA/IBMA/NVP | 39.5/39.5/10.5/10.5 | 59,800 |
| 15 | CEMA/LMA/IBMA/NVP | 40/40/10/10 | ~20,000 |
| 16 | CEMA/LMA/IBMA/NVP | 40/40/10/10 | ~40,000 |
| 17 | CEMA/LMA/IBMA/NVP | 40/40/10/10 | 54,100 |
| 18 | CEMA/LMA/IBMA/NVP | 40/40/10/10 | 64,400 |
| 19 | CEMA/LMA/IBMA/NVP | 40/40/10/10 | 83,100 |
| 20 | CEMA/LMA/IBMA/NVP | 40/40/10/10 | 107,500 |
| 21 | CEMA/LMA/IBMA/NVP | 40/40/10/10 | 154,500 |
| 22 | CEMA/LMA/IBMA/NVP | 40/40/10/10 | 222,200 |
| 23 | CEMA/LMA/IBMA/NVP | 42.5/42.5/10/5 | 55,300 |
| 24 | CEMA/LMA/IBMA/NVPgraft | 40/40/10/10 | 36,300 |
| 25 | CEMA/LMA/IBMA/NVPgraft | 42.5/42.5/10/5 | |
| 26 | CEMA/LMA/IBMA/NVPgraft | 42.5/42.5/10/5 | 40,800 |
| 27 | CEMA/LMA/IBMA/NVPgraft | 42.5/42.5/10/5 | 46,600 |
| 28 | CEMA/LMA/IBMA/NVP | 32.7/43.8/13.7/9.8 | 256,000 |
| 29 | IDMA/DMAPMAm | 85/15 | 19,700 |
| 30 | IDMA/NVP | 85/15 | 36,500 |
| 31 | IDMA/NVP | 90/10 | 28,200 |
| 32 | IDMA/NVP | 90/10 | 33,700 |
| 33 | IDMA/NVP | 90/10 | 39,900 |
| 34 | IDMA/NVP | 95/5 | 32,200 |
| 35 | LMA/DMAPMAm | 60/40 | 18,700 |
| 36 | LMA/DMAPMAm | 90/10 | 32,700 |
| 37 | LMA/HPMA | 90/10 | 64,800 |
| 38 | LMA/NVP | 80/20 | 68,000 |
| 39 | LMA/NVP | 90/10 | 68,800 |
| 40 | SMA/DMAEMA | 80/20 | 52,300 |
| 41 | SMA/DMAEMA | 90/10 | 50,600 |
| 42 | SMA/DMAEMA | 95/5 | 49,200 |
| 43 | SMA/DMAPMAm | 60/40 | 17,600 |
| 44 | SMA/DMAPMAm | 70/30 | 20,000 |
| 45 | SMA/DMAPMAm | 80/20 | 20,600 |
| 46 | SMA/DMAPMAm | 80/20 | 25,600 |
| 47 | SMA/DMAPMAm | 85/15 | 18,600 |
| 48 | SMA/DMAPMAm | 85/15 | 20,800 |
| 49 | SMA/DMAPMAm | 85/15 | 22,000 |
| 50 | SMA/DMAPMAm | 85/15 | 25,900 |
| 51 | SMA/DMAPMAm | 85/15 | 25,900 |
| 52 | SMA/DMAPMAm | 85/15 | 27,600 |
| 53 | SMA/DMAPMAm | 85/15 | 32,800 |
| 54 | SMA/DMAPMAm | 85/15 | 43,000 |
| 55 | SMA/DMAPMAm | 85/15 | 85,000 |
| 56 | SMA/DMAPMAm | 85/15 | 94,000 |
| 57 | SMA/DMAPMAm | 85/15 | 180,000 |
| 58 | SMA/DMAPMAm | 85/15 | 200,000 |
| 59 | SMA/DMAPMAm | 90/10 | 35,300 |
| 60 | SMA/DMAPMAm | 90/10 | 88,200 |
| 61 | SMA/DMAPMAm | 90/10 | 94,000 |
| 62 | SMA/DMAPMAm | 95/5 | 44,400 |
| 63 | SMA/DMAPMAm | 95/5 | 77,700 |
| 64 | SMA/DMAPMAm (5 % grafted) | 90/10 | 50,600 |
| 65 | SMA/DMAPMAm (toluene) | 90/10 | 27,200 |
| 66 | SMA/IDMA | 50/50 | 56,600 |
| 67 | SMA/IDMA/MMA/HPMA | 30.3/60.7/4/5 | 302,000 |
| 68 | SMA/IDMA/MMA/NVP | 30/56/10/4 | 237,000 |
| 69 | SMA/LMA/DMAPMAm | 31.5/58.5/10 | 28,600 |
| 70 | SMA/LMA/HPMA | 15/65/20 | 14,000 |
| 71 | SMA/LMA/NVP | 31.5/58.5/10 | 46,700 |

In a spray tank, the dispersions of this invention are typically diluted by oil alone, water alone, an oil/water/surfactant mixture, or a water/surfactant mixture and then applied in the field using methods commonly employed, such as conventional high-volume hydraulic sprays, low-volume sprays, air-blast, and aerial sprays. When water is used alone, a surfactant, which acts as an emulsifier, is also required. The surfactant may be included as a component of the dispersion or added to the spray tank separately. Preferred surfactants include ethoxylated secondary alcohols with a C₁₂-C₁₄ chain length or mixtures of ethoxylated alcohols with alkyl benzene sulfonates, preferably calcium dodecylbenzene sulfonates, those based on trisiloxane, or mixtures thereof. Also beneficial for water dilutability is the presence of from 0.05 percent to 1 percent, by weight, preferably 0.05 to 0.1 percent, more preferably 0.05 to 0.06 percent, of HPMA or hydroxyethylacrylate ("HEMA"), preferably HPMA, in the dispersion. This HPMA or HEMA may either be incorporated into the oil-soluble polymer as a component of the polar monomer or be incorporated into the formulation as a component of a separate polymer. The dilution and rate of application will depend upon the type of equipment employed, the method and frequency of application desired, the presence of optional pesticides, the pest to be controlled, and the crop to be treated. It is usually desirable, particularly in the case of foliar spray formulations, to include adjuvants, such as wetting agents, spreading agents, dispersing agents, stickers, adhesives and the like in accordance with agricultural practices. Such adjuvants commonly used in the art can be found in *McCutcheon's Emulsifiers and Detergents, McCutcheon's Emulsifiers and Detergents/Functional Materials* and *McCutcheon's Functional Materials* all published annually by McCutcheon Division of MC Publishing Company (New Jersey) and *Farm Chemicals Handbook* published annually by Meister Publishing Company (Ohio).

The following examples illustrate several aspects of this invention in detail:

### GENERAL PROCEDURES USED FOR EXAMPLES

1. Propanil is added slowly to a mixture of the oil-soluble polymer and the oil in a stainless steel beaker under agitation using an overhead homogenizer at low speed (9500-13500 revolutions per minute ("rpm")). As the propanil content increases, the homogenizer speed is increased to compensate for thickening of the sample. The total homogenation time and rate must be optimized. If the time and rate are too low a homogeneous blend is not obtained. If they are too high, flocculation (clumping) of the dispersion occurs.

2. Propanil is weighed into a 1 liter polyethylene coated jar and heated to a temperature above its melting point until melted. The oil-soluble polymer and the oil are mixed in a stainless steel beaker and heated (or cooled) to 50 °C. The polymer/oil mixture is then agitated using an overhead homogenizer at low speed (8000-9500 rpm). The melted propanil is then added slowly to the polymer/oil mixture. As the pesticide content increases, the homogenizer speed is increased to compensate for thickening of the sample. The total homogenation time and rate, as well as the temperature of the components prior to addition, must be optimized. If the time and rate are too low a homogeneous blend is not obtained. If they are too high, flocculation (clumping) of the dispersion occurs.

Using either process, samples may then be milled to further reduce the particle size, preferably in bead mill such as an Eiger mill for approximately 4-15 minutes at a minimum of 3500 rpm. The length of the secondary milling is determined by the nature of the mill, the mill media, and the desired particle size.

### Example 1:

Propanil technical (200 g.) was weighed into a 1 liter polyethylene ("PE") coated jar. The technical was melted by holding in an oven at a temperature of 93°C overnight. The melted technical was left in the oven until just before it was to be added to the following oil/polymer mixture.

Oleo Blanco oil (158 g.) in a stainless steel beaker was combined with oil-soluble polymer (polymer example 39) (30 g). The mixture was hand mixed with a spatula until uniform. The oil and polymer were then heated on a hot plate to 50°C and held constant at this temperature.

The warm oil/polymer mixture was positioned under a homogenizer (Ultra-Turrax™ T-25 homogenizer, Ika Labortechnica) supported by the hot plate and a jack stand. The homogenizer was turned on at very low speed (~8,000 rpm) and the oil/polymer mixture was agitated. The melted technical was removed from the oven and slowly added to the oil/polymer mixture. As the solid content increased, the speed of the homogenizer was increased to help mix the thickening sample. When the mixture became homogeneous, agitation was stopped and the mixture allowed to cool to room temperature.

Samples were then bead milled for various lengths of time to further reduce the particle size using the following procedure:

Approximately 25-30 ml of 1 mm glass beads are loaded into the bead chamber of a 50 ml Eiger™ mill (Model M50 from Eiger Machinery, Inc.). The mill is cooled using water at a temperature of approximately -10 °C. The sample is added to the mill. The sample is milled for from 4 to 15 minutes at 3500 rpm. After milling until there are signs of thickening, the sample is discharged from the milling chamber. The milling process heats the sample to above room temperature. After the sample is cooled to room temperature, optional surfactant is added using a magnetic stirrer to provide agitation for approximately 30 minutes. This results in a visually homogeneous product with a propanil particle size of from 0.5 µ to 10 µ. Samples prepared in this fashion had the following properties:

| Time | Property Observed |
|---|---|
| After cooling | Free flowing liquid |
| 3 days at | Less than 1 percent separation |
| Room Temp. | No sedimentation |
| | No gelling |
| 4-5 months. | Less than 5 percent separation |
| at Room | No sedimentation |
| Temp. | Minor gelling which disappeared upon stirring |
| 1 week. at | Less than 5 percent separation |
| 54 °C | No sedimentation |
| | Slight decrease in viscosity |

### Example 2:

Propanil solid flakes were added to a mixture of the polymer and oil of Example 1 in the same ratios. The mixture was homogenized at 9500-13500 rpm for from 2 to 4 minutes until a homogeneous creamy fluid was obtained. At this point the sample was at a temperature of about 50 °C and had a viscosity of approximately 200 cpi. The sample was cooled to room temperature and then bead milled as in Example 1. The resulting sample had properties similar to those of the product of Example 1.

### Example 3:

The procedure of Example 1 was repeated except that polymer example 71 was used instead of polymer example 39. The product produced with polymer example 71 had properties similar to those of product produced with polymer example 39.

### Comparison Example

When the procedure of Example 1 was repeated using an oil soluble polymer comprising only LMA, significant flocculation occurred during the homogenization step. Changes in homogenization rate and length of time were not sufficient to eliminate the flocculation.

## Claims

1. A stable propanil dispersion comprising:
a) from 0.1 percent to 50 percent, by weight, propanil;
b) an agricultural oil; and
c) an oil-soluble polymer, wherein:
i) the polymer has a weight average molecular weight of from 3,000 to 350,000 atomic mass unites;
ii) the polymer comprises from 2.5 to 35 percent, by weight, of a copolymerized polar monomer selected from N-vinylpyrrolidone, hydroxy(C₂-C₈)alkyl methacrylate, dimethylaminopropyl methacrylate and dimethylaminopropyl methacrylamide, and mixtures thereof; and
iii) the polymer comprises from 65 to 97.5 percent, by weight, of an alkyl methacrylate, an alkyl acrylate, or mixture thereof wherein the alkyl groups of each such methacrylate or acrylate independently contain from 1 to 24 carbon atoms with an average of from 10 to 18 carbon atoms.

2. The stable propanil dispersion of claim 1 wherein the polymer comprises from 65 to 97.5 percent , by weight, of an alkyl methacrylate, an alkyl acrylate, or mixture thereof wherein the alkyl groups of the methacrylates or acrylates contain an average of from 12 to 16 carbon atoms.

3. The stable propanil dispersion of claim 1 wherein the polymer comprises 2.5 to 35 percent, by weight, of a copolymerized polar monomer selected from N-vinylpyrrolidone and mixtures of N-vinylpyrrolidone with hydroxypropyl methacrylate, dimethylaminopropyl methacrylate or dimethylaminopropyl methacrylamide.

4. The stable propanil dispersion of claim 1 wherein the polymer has a weight average molecular weight of from 50,000 to 80,000 atomic mass units.

5. The stable propanil dispersion of claim 1 wherein the polymer comprises from 3 to 20 percent, by weight, of N-vinylpyrrolidone.

6. The stable propanil dispersion of claim 1 wherein the composition further comprises from 0.05 to 0.1 percent, by weight, of a polymer comprising hydroxypropyl methacrylate or hydroxyethyl methacrylate.

7. The stable propanil dispersion of claim 1 wherein the oil-soluble polymer comprises:
a) from 2.5 to 35 percent, by weight, of a copolymerized polar monomer selected from N-vinylpyrrolidone, dimethylaminopropyl methacrylate and dimethylaminopropyl methacrylamide, and mixtures thereof;
b) from 0.05 to 0.1 percent , by weight, of copolymerized hydroxypropyl methacrylate or hydroxyethylmethacrylate; and
c) from 65 to 97.45 percent percent, by weight, of an alkyl methacrylate, an alkyl acrylate, or mixture thereof wherein the alkyl groups of the methacrylates or acrylates independently contain from 1 to 24 carbon atoms with an average of from 10 to 18 carbon atoms.

8. A method of preparing the stable propanil dispersion of claim 1, comprising the steps of:
a) admixing propanil with an agricultural oil and an oil-soluble polymer, wherein:
i) the polymer has a weight average molecular weight of from 3,000 to 350,000 atomic mass unites;
ii) the polymer comprises from 2.5 to 35 percent, by weight, of a copolymerized polar monomer selected from N-vinylpyrrolidone, hydroxy(C₂-C₈)alkyl methacrylate, dimethylaminopropyl methacrylate and dimethylaminopropyl methacrylamide, and mixtures thereof; and
iii) the polymer comprises from 65 to 97.5 percent, by weight, of an alkyl methacrylate, an alkyl acrylate, or mixture thereof wherein the alkyl groups of each such methacrylate or acrylate independently contain from 1 to 24 carbon atoms with an average of from 10 to 18 carbon atoms.
b) optionally heating the mixture to a temperature above the melting point of propanil until the propanil melts; and
c) mixing the admixture until a homogeneous blend is obtained.

9. A method of preparing the stable propanil dispersion of claim 1, comprising the steps of::
a) melting propanil;
b) admixing the melted propanil with an agricultural oil and an oil-soluble polymer, wherein
i) the polymer has a weight average molecular weight of from 3,000 to 350,000 atomic mass unites;
ii) the polymer comprises from 2.5 to 35 percent, by weight, of a copolymerized polar monomer selected from N-vinylpyrrolidone, hydroxy(C₂-C₈)alkyl methacrylate, dimethylaminopropyl methacrylate and dimethylaminopropyl methacrylamide, and mixtures thereof; and
iii) the polymer comprises from 65 to 97.5 percent, by weight, of an alkyl methacrylate, an alkyl acrylate, or mixture thereof wherein the alkyl groups of each such methacrylate or acrylate independently contain from 1 to 24 carbon atoms with an average of from 10 to 18 carbon atoms.
optionally heating the agricultural oil, the oil-soluble polymer, or both prior to adding the propanil; and
c) mixing the admixture until a homogeneous blend is obtained.

10. The method of claim 8 or claim 9 further comprising after step c, step d) milling the homogeneous blend to reduce the propanil particle size.
